# EUROPEAN PATENT SPECIFICATION

(11) **EP 3 195 739 B1**
(45) Date of publication and mention of the grant of the patent: **30.10.2019**
(21) Application number: 17151936.6
(22) Date of filing: 18.01.2017
(51) Int. Cl.: A24F 47/00

(54) **SMART CONTROL METHOD AND CONTROL SYSTEM FOR AN ELECTRONIC CIGARETTE, AND ELECTRONIC CIGARETTE**
INTELLIGENTE STEUERUNG UND STEUERUNGSSYSTEM FÜR EINE ELEKTRONISCHE ZIGARETTE, ELEKTRONISCHE ZIGARETTE
METHODE DE CONTROLE INTELLIGENTE ET SYSTÈME DE CONTRÔLE POUR UNE CIGARETTE ÉLECTRONIQUE ET CIGARETTE ÉLECTRONIQUE

(30) Priority: 25.01.2016 CN 201610049525
(43) Date of publication of application: 26.07.2017
(73) Proprietor: Shenzhen First Union Technology Co., Ltd., Shenzhen, Guangdong 518100 (CN)
(72) Inventor: LI, Yonghai, Shenzhen, Guangdong 518100 (CN); XU, Zhongli, Shenzhen, Guangdong 518100 (CN); HU, Shuyun, Shenzhen, Guangdong 518100 (CN); KUANG, Yecheng, Shenzhen, Guangdong 518100 (CN)
(74) Representative: ZHAOffice SPRL

(56) References cited:
- CN-A- 105 011 378
- CN-A- 105 095 810
- DE-A1-102014 005 730
- US-A1- 2010 163 063
- US-A1- 2013 284 192
- US-A1- 2015 075 545
- US-A1- 2015 075 546

## Description

### FIELD OF THE DISCLOSURE

The present application relates to the field of electronic cigarettes, and more particularly to a smart control method and control system for an electronic cigarette, and electronic cigarette.

### BACKGROUND OF THE DISCLOURE

An electronic cigarette has a same outside appearance and a similar smell to a cigarette. The electronic cigarette is mainly used to simulate smoking to provide for quitting smoking or smoking without affecting health.

Herein, the electronic cigarette comprises an atomizer, in which the heating wire with different output powers may provide different smoking feelings. However, in a prior electronic cigarette, the output power of the heating wire in the atomizer is set well according to parameters of the atomizer, thus being not be adjusted smartly to meet different requirement of users.

US 2015/075546A1 discloses an add-on module for an electronic cigarette or a vaporizer providing an electronic means to communicate with remote computers and electronic devices and to provide a dynamic means to control temperature over time, manage and save device settings, dynamically control temperatures, monitor sensors, and transmit and read this data from remote computing devices for display, alteration and storage.

US 2013/284192A1 discloses an electronic cigarette ("e-Cig") including a controller for providing various operations within an e-Cig. Enhancements for the controller may provide for improved operations and control for the e-Cig. In one embodiment, there may be a communications capability that may allow for the e-Cig to communicate with a consumer device. The consumer may then control smoke properties, monitor operations, adjust settings, and/or receive product notifications or offers through the consumer device's communication with the e-Cig. The communications may enable connections to various websites on the Internet for usage tracking or social networking.

### SUMMARY OF THE DISCLOSURE

A smart control method and control system for an electronic cigarette, and electronic cigarette are provided for the main technical problem in disclosure, smartly adjusting the output power of the heating wire of the atomizer.

Aiming at above technical problems, one technical solution adopted by the disclosure is that a smart control method for an electronic cigarette according to claim 1, comprising: building a communication between a mobile terminal and the electronic cigarette; obtaining an identification number of the electronic cigarette by the mobile terminal, wherein the identification number of the electronic cigarette and heating wire parameters are stored in a cloud server, and the heating wire parameters correspond to the identification number; obtaining the heating wire parameters by the mobile terminal from the cloud server according to the identification number of the electronic cigarette; acquiring a working power of the electronic cigarette by the mobile terminal according to the heating wire parameters and smoking parameters inputted from the mobile terminal; and obtaining the working power by the electronic cigarette via the communication from the mobile terminal, and controlling a heating wire of the electronic cigarette to work at the working power.

Wherein, the step of obtaining the identification number of the electronic cigarette by the mobile terminal, comprises: scanning a two-dimensional bar code of the electronic cigarette by the mobile terminal to obtain the identification number of the electronic cigarette, wherein the identification number of the electronic cigarette is the two-dimensional bar code uniquely.

Wherein, the step of building a communication between a mobile terminal and the electronic cigarette, is building a wireless communication by the mobile terminal with the electronic cigarette; and the step of obtaining the working power by the electronic cigarette via the communication from the mobile terminal and controlling a heating wire of the electronic cigarette to work at the working power, is obtaining the working power by the electronic cigarette via the wireless communication from the mobile terminal, and controlling the heating wire thereof to work at the working power.

Wherein, the smoking parameters comprise a smoking frequency and smoking modes at least including a max smoke outputting mode, a best taste outputting mode, a mini power outputting mode and a healthy smoking mode.

Wherein, the step of acquiring a working power of the electronic cigarette by the mobile terminal according to the heating wire parameters and the smoking parameters inputted from the mobile terminal, comprises: calculating parameters of an atomizer in the electronic cigarette according to the heating wire parameters; and calculating the working power of the heating wire according to the parameters of the atomizer and the smoking frequency.

Wherein, the heating wire parameters at least comprise a wire-diameter parameter and series-parallel connection parameters of the heating wire.

Another technical solution adopted by the disclosure is that a smart control system for an electronic cigarette, comprising: the electronic cigarette according to claim 7, having an electric power supply formed therein; a cloud server; configured to store an identification number of the electronic cigarette and heating wire parameters corresponding to the identification number of the electronic cigarette; and a mobile terminal, configured to build a communication with the electronic cigarette, obtain the identification number of the electronic cigarette and the heating wire parameters corresponding to the identification number of the electronic cigarette from the cloud server, and acquire a working power of the electronic cigarette according to the heating wire parameters and smoking parameters inputted from the mobile terminal; wherein the electronic cigarette is configured to obtain the working power via the communication from the mobile terminal, and control the heating wire thereof to work at the working power.

Wherein, the identification number of the electronic cigarette is a unique two-dimensional bar code, and the mobile terminal further comprises a scanning module configured to scan the two-dimensional bar code of the electronic cigarette to obtain the identification number of the electronic cigarette.

Wherein, the electric power supply comprises a first communication module formed therein, the mobile terminal further comprises a second communication module formed therein, and the first communication module and the second communication module are configured to build a wireless communication between the electronic cigarette and the mobile terminal.

Wherein, the electric power supply further comprises a control module configured to obtain the working power from the mobile terminal via a wireless communication and control the heat wire of the electronic cigarette to work at the working power.

Wherein, the mobile terminal further comprises a smoking-frequency inputting module and a smoking-mode inputting module formed therein, the smoking-frequency inputting module is configured to input a user's smoking frequency to gather the smoking parameters, and the smoking-mode inputting module is configured to input a user's smoking mode to gather the smoking parameters, and the smoking-mode inputting module comprises a group of smoking modes consisted of a max smoke outputting mode, a best taste outputting mode, a mini power outputting mode and a healthy smoking mode.

Wherein, the mobile terminal further comprises a processing module, configured to calculate the working power of the electronic cigarette according to the heating wire parameters and the smoking parameters after obtaining the heating wire parameters corresponding to the identification number of the electronic cigarette from the cloud server, and the smoking parameters from the smoking-frequency inputting module and the smoking-mode inputting module.

Wherein, the heating wire parameters at least comprise a wire-diameter parameter and series-parallel connection parameters of the heating wire.

Another technical solution adopted by the disclosure is that an electronic cigarette according to claim 14, comprising: an electric power supply, having a communication module and a control module formed therein; and an electronic tag, configured to identify an identification number thereof; wherein the communication module is configured to build a communication with a mobile terminal configured to obtain the identification number of the electronic cigarette and heating wire parameters corresponding to the identification number of the electronic cigarette from a cloud server in which the identification number of the electronic cigarette and the heating wire parameters corresponding to the identification number of the electronic cigarette are stored, and the control module is configured to obtain a working power corresponding to the identification number from the mobile terminal via the communication connection and control the heat wire therein to work at the working power.

Wherein, the electronic tag is a two-dimensional bar code uniquely.

The beneficial effects of the disclosure are as follow. The mobile terminal 12 builds a communication with the electronic cigarette 11, and obtains the identification number of the electronic cigarette 11, corresponding heating wire parameter, and the heating wire parameters according to the identification number of the electronic cigarette 11 from the cloud server, and acquires the working power of the electronic cigarette 11 according to heating wire parameters and smoking parameters inputted from the mobile terminal 12. The electronic cigarette 11 obtains the working power via the communication from the mobile terminal 12 and controls the heating wire thereof to work at the working power. In the above manner, outputting power may be controlled smartly in the disclosure, thus giving users different smoking feeling to the electronic cigarette.

### BRIEF DESCRIPTION OF THE DRAWINGS

Fig. 1 illustrates a schematic drawing of a smart control system for an electronic cigarette in accordance with an embodiment of the disclosure.
Fig. 2 illustrates a schematic drawing of an electronic cigarette in Fig. 1, in accordance with an embodiment.
Fig. 3 illustrates a schematic drawing of a mobile terminal in Fig. 1, in accordance with an embodiment.
Fig. 4 illustrates a schematic flowchart of a smart control method for an electronic cigarette in accordance with a first embodiment of the disclosure.
Fig. 5 illustrates a schematic flowchart of a smart control method for an electronic cigarette in accordance with a second embodiment of the disclosure.

### DETAILED DESCRIPTION OF THE DISCLOSURE

Some words are used to name special components in the description and claims. What one skilled in the art may understand different nouns may be adopted to name same components by manufacturers. In the description and claims, the difference of names is not used to as a manner for differentiating components, while difference on functions of components is used to as the criterion for differentiating. Now detailed description of the disclosure is described with reference to the drawings and embodiments.

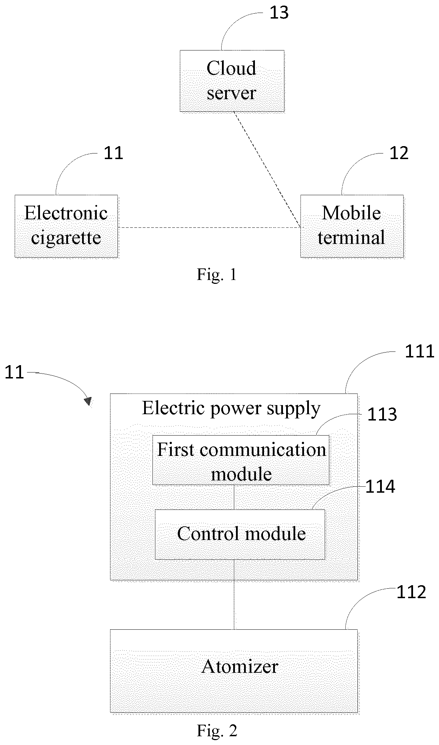

Fig. 1 illustrates a schematic drawing of a smart control system for an electronic cigarette in accordance with an embodiment of the disclosure. As shown in Fig. 1, the system comprises an electronic cigarette 11, a mobile terminal 12 and a cloud server 13.

The cloud server 13 is configured to store the identification number of the electronic cigarette 11 and heating wire parameters corresponding to the identification number in the electronic cigarette 11. The heating wire parameters at least include a wire-diameter parameter and series-parallel connection parameters of the heating wire.

The mobile terminal 12, connected to the electronic cigarette 11 and the cloud server 13, respectively, is configured to build a communication with the electronic cigarette 11, obtain the identification number of the electronic cigarette 11 and heating wire parameters of the electronic cigarette from the cloud server 13, and acquire a working power of the electronic cigarette 11 according to heating wire parameters and smoking parameters inputted therefrom.

The communication between the mobile terminal 12 and the electronic cigarette 11 may be a wireless communication, and also may be a wired communication.

The electronic cigarette 11 is configured to obtain the above working power through the communication between the mobile terminal 12 and the electronic cigarette 11 and control the heating wire thereof to work at the above working power. The heating wire of the electronic cigarette 11 works at the above working power, specifically meaning that the heating wire of electronic cigarette 11 outputs the working power, such that the electronic cigarette 11 outputs different amounts of smoke, making users enjoy different smoking feelings with their own choices.

As shown in Fig. 2, which illustrates a schematic drawing of an electronic cigarette in Fig. 1, in accordance with an embodiment, the electronic cigarette 11 comprises an electric power supply 111 and an atomizer 112. The electric power supply 111 is used to provide electric power for the atomizer 112. The electric power supply 111 and the atomizer 112 are connected with a detachable inserting structure. Specifically speaking, the electric power supply 111 comprises a first communication module 113 and a control module 114 formed therein, and the atomizer 112 comprises the heating wire (not shown in the Figs.).

In this embodiment, an electronic tag is disposed on the atomizer 112 to identify the identification number of the electronic cigarette 11. Advantageously, the electronic tag is a two-dimensional bar code uniquely. In another embodiment, the electronic tag for identifying the identification number of the electronic cigarette 11 may also disposed on the electric power supply 111. Where the electronic tag is disposed is not limited in the disclosure.

In the electronic cigarette 11, the first communication module 113 is configured to establish a communication with the mobile terminal 12 to transfer information between the electronic cigarette 11 and the mobile terminal 12. The communication may be a wireless communication and also may be a wired communication. And the wireless communication may be WIFI communication, Bluetooth communication, infrared communication or NFC.

The control module 114 is connected to the first communication module 113 and the atomizer 112, configured to control the heating wire of the atomizer 112 to work at a working power, after the working power, corresponding to the identification number of the electronic cigarette 11, has been obtained through the first communication module 113 from the mobile terminal 12.

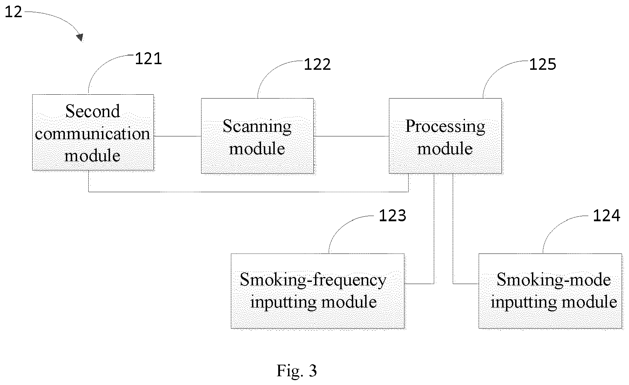

As shown in Fig. 3, which illustrates a schematic drawing of a mobile terminal in Fig. 1, in accordance with an embodiment, the mobile terminal 12 comprises a second communication module 121, a scanning module 122, a smoking-frequency inputting module 123, a smoking-mode inputting module 124 and a processing module 125.

In the mobile terminal 12, the second communication module 121 is configured to build a communication between the electronic cigarette 11 and the mobile terminal 12 with the first communication module 113 in the electronic cigarette 11.

The scanning module 122, connected to the second communication module 121, is configured to scan the electronic tag on the atomizer 112 in the electronic cigarette 11 to obtain the identification number of the electronic cigarette 11 after the communication connection has been built between the second communication module 121 and the first communication module 113. Specifically speaking, when the electronic tag is a two-dimensional bar code, the scanning module 122 scans the two-dimensional bar code on the atomizer 112 to obtain the identification number of the electronic cigarette 11.

The smoking-frequency inputting module 123 is configured to input a user's smoking frequency to gather smoking parameters. The smoking frequency is inputted by user self. However, when the smoking frequency is not inputted by the user, a default smoking frequency shall be adopted. The default smoking frequency is 10 seconds specifically.

The smoking-mode inputting module 124 is configured to input a user's smoking mode to gather smoking parameters. The smoking-mode inputting module 124 comprises a group of smoking modes at least including a max smoke outputting mode, a best taste outputting mode, a mini power outputting mode and a healthy smoking mode. The max smoke outputting mode is that the heating wire in the atomizer works at the max output power the heating wire supports. The best taste outputting mode means that the power heating wire outputs in the atomizer makes the smoke and the temperature of the nuzzle be within the best taste range. The mini power outputting mode means that the heating wire in the atomizer works at the mini output power for normal amount of the smoke. The healthy smoking mode means that the power the heating wire outputs in the atomizer makes the atomizer work within the temperature range with 230-270 degrees centigrade.

The processing module 125 is connected to the second communication module 121, the scanning module 122, the smoking-frequency inputting module 123 and the smoking-mode inputting module 124, respectively. The processing module 125 is configured to obtain the heating wire parameters corresponding to the identification number of the electronic cigarette 11 from the cloud server 13 and the smoking parameters inputted by users with the smoking-frequency inputting module 123 and the smoking-mode inputting module 124, after acquiring the identification number of the electronic cigarette 11 with the scanning module 122, and then acquire the working frequency of the electronic cigarette 11 according to the heating wire parameters and the smoking parameters. Specifically, parameters of the atomizer 112, such as the superficial area, heat, temperature, power of the surface and power, may be calculated according to the heating wire parameters, and further the working power of the heating wire of the atomizer 112 may be calculated according to the above parameters of the atomizer 112 and the smoking frequency, such that the heating wire of the atomizer 112 works in the working mode selected by users, after the processing module 125 has obtained the heating wire parameters. Further, the working frequency is transmitted to the electronic cigarette 11 by the second communication module 121.

What one skilled in the art should understand four working modes disclosed in the disclosure is just schematic, and the electronic cigarette 11 may also work in other self-defined working modes different from those four working modes in the disclosure, which is not restrictive in the disclosure.

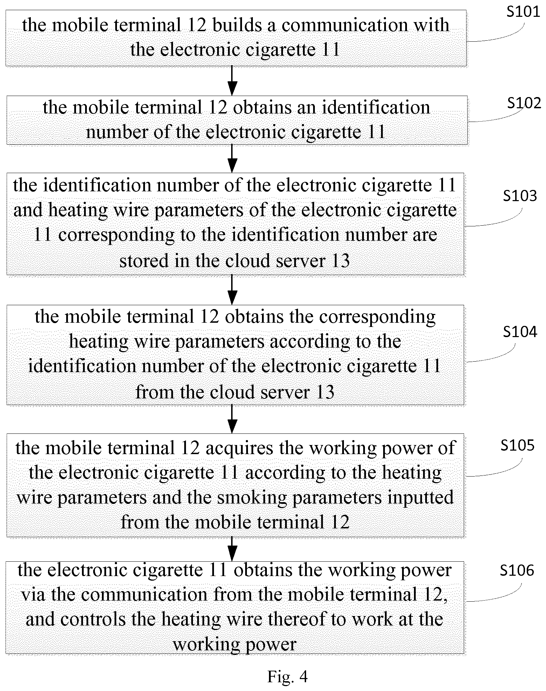

Fig.4 illustrates a schematic flowchart of a smart control method for an electronic cigarette in accordance with a first embodiment of the disclosure. The smart control system in Fig. 1 is based on in the disclosure. What is worth to be observed, the flowchart of the method in Fig. 4 is not limited in the disclosure, if substantial result is the same. As shown in Fig. 4, the method comprises steps as followed.

S101, the mobile terminal 12 builds a communication with the electronic cigarette 11.

In step S101, the communication built by the mobile terminal 12 with electronic cigarette 11 may be a wireless communication or also be a wired communication. Herein, the wireless communication specifically may be WIFI communication, Bluetooth communication, infrared communication or NFC.

S102, the mobile terminal 12 obtains the identification number of the electronic cigarette 11.

In step S102, a unique identification number is provided for the electronic cigarette 11. The provided identification number is adopt to identify the electronic cigarette 11, thus the electronic cigarette 11 is managed effectively to prevent a situation in which there are many electronic cigarettes. The mobile terminal 12 may be a smart telephone, a tablet personal computer or palmtop, etc.

In this embodiment, the mobile terminal 12 may obtain the identification number of the electronic cigarette 11 used by users via a wireless communication such as WIFI communication, Bluetooth communication or infrared communication. The mobile terminal 12 may also obtain the identification number of the electronic cigarette 11 through NFC. The mobile terminal 12 may also obtain the identification number of the electronic cigarette 11 by means of a wired manner. Further, the mobile terminal 12 may obtain the identification number of the electronic cigarette 11 used by users in a scanning manner. The way by which the mobile terminal 12 obtains the identification number of the electronic cigarette 11 is not limited in the disclosure.

S103, the identification number of the electronic cigarette 11 and the heating wire parameters in the electronic cigarette 11 corresponding to the identification number are stored in the cloud server 13.

In step S103, different identification numbers of the electronic cigarette 11 and the corresponding heating wire parameters in the electronic cigarette 11 are stored in the cloud server 13. Herein, heating wire parameters at least includes a wire-diameter parameter and series-parallel connection parameters of the heating wire.

S104, the mobile terminal 12 obtains the corresponding heating wire parameters from the cloud server 13 according to the identification number of the electronic cigarette 11.

In step S104, the step of establishing a communication between the mobile terminal 12 and the cloud server 13 is implied in the step of obtaining the heating wire parameters of the electronic cigarette 11 by the mobile terminal 12 from the cloud server 13, which are used by users. What one skilled in the art shall understand that transferring information between the mobile terminal 12 and the cloud server 13 belongs to the prior art, thus for simple, of which detailed description shall be described in the disclosure.

S105, the mobile terminal 12 acquires the working power of the electronic cigarette 11 according to the heating wire parameters and the smoking parameters inputted from the mobile terminal 12.

In step S105, the smoking parameters input by the mobile terminal 12 comprise a smoking frequency and smoking modes, wherein, smoking modes at least includes a max smoke outputting mode, a best taste outputting mode, a mini power outputting mode and a healthy smoking mode.

Parameters of the atomizer 112, such as the superficial area, heat, temperature, power of the surface and power, may be calculated according to the heating wire parameters, and further the working power of the heating wire in the atomizer 112 may be calculated according to the above parameters of the atomizer 112 and the smoking frequency, after the heating wire parameters have been obtained by the mobile terminal from the cloud server 13, such that the heating wire in the atomizer 112 works in the working mode selected by users.

S106, the electronic cigarette 11 obtains the working power via the communication from the mobile terminal 12, and controls the heating wire thereof to work at the working power.

In step S106, the electronic cigarette 11 obtains the working power through the communication between the mobile terminal 12 and the electronic cigarette 11 from the mobile terminal 12 and controls the heating wire of the atomizer 112 to work at the working power, such that the electronic cigarette 11 can be smoke by users with their own requirements, after the working power has been obtain by the mobile terminal 12 according to the heating wire parameters and smoking parameters inputted by users in step S105.

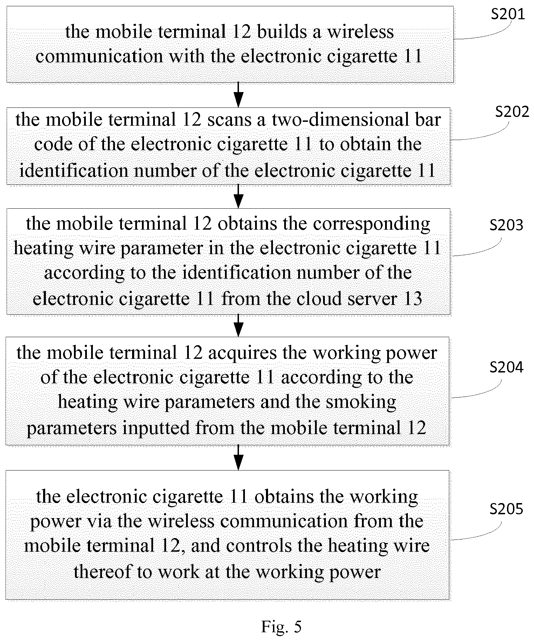

Fig.5 illustrates a schematic flowchart of a smart control method for an electronic cigarette in accordance with a first embodiment of the disclosure. The smart control system in Fig. 1 is based on in the disclosure. What is worth to be observed, the flowchart of the method in Fig. 5 is not limited in the disclosure, if substantial result is the same. As shown in Fig. 5, the method comprises steps as followed.

S201, the mobile terminal 12 builds a wireless communication with the electronic cigarette 11.

In step S201, the electronic cigarette 11 is comprised of an electric power supply 111 and an atomizer 112. The electric power supply 111 comprises a first communication module 113 formed therein, and the mobile terminal 12 comprises a second communication module 121 formed therein.

The step that the mobile terminal 12 builds a wireless communication with the electronic cigarette 11 is specifically building the wireless communication between the first communication module 113 and the second communication module 121, such that information shall be transmitted between the first communication module 113 and the second communication module 121.

Herein, the wireless communication may be WIFI communication, Bluetooth communication, infrared communication or NFC.

S202, the mobile terminal 12 scans a two-dimensional bar code of the electronic cigarette 11 to obtain the identification number of the electronic cigarette 11.

In step S202, a unique two-dimensional bar code is disposed on the atomizer 112 of the electronic cigarette 11. The two-dimensional bar code is an electronic tag to identify the identification number of the electronic cigarette 11. The mobile terminal 12 comprises a scanning module 122.

In another embodiment, the unique two-dimensional bar code may be disposed on the electric power supply 111 of the electronic cigarette 11, which is not restrictive in the disclosure.

The scanning module 122 scans the two-dimensional bar code on the atomizer 112 to obtain the identification number of the electronic cigarette 11.

S203, the mobile terminal 12 obtains the corresponding heating wire parameter of the electronic cigarette 11 according to the identification number of the electronic cigarette 11 from the cloud server 13.

In step S203, different identification numbers of the electronic cigarette 11 and the corresponding heating wire parameters in the electronic cigarette 11 are stored in the cloud server 13. Herein, heating wire parameters at least includes a wire-diameter parameter and series-parallel connection parameters of the heating wire.

The mobile terminal 12 comprises a processing module 125 formed therein. The processing module 125 obtains the corresponding heating wire parameter of the electronic cigarette 11 from the cloud server 13 according to the identification number, after obtaining the identification number of the electronic cigarette 11 with the scanning module 122.

S204, the mobile terminal 12 acquires the working power of the electronic cigarette 11 according to the heating wire parameters and the smoking parameters inputted from the mobile terminal 12.

In step S204, the mobile terminal 12 further comprises a smoking-frequency inputting module 123 and a smoking-mode inputting module 124 formed therein. The smoking-frequency inputting module 123 is configured to input a user's smoking frequency to acquire smoking parameters. The smoking-mode inputting module 124 is configured to input a user's smoking mode to acquire smoking parameters. Herein, the smoking parameters include a smoking frequency and smoking modes. Smoking modes at least include a max smoke outputting mode, a best taste outputting mode, a mini power outputting mode and a healthy smoking mode.

The processing module 125 acquires the working power of the electronic cigarette 11 according to the heating wire parameters and smoking parameters, after obtaining the heating wire parameters corresponding to the identification number of the electronic cigarette 11 from the cloud server 13 and smoking parameters obtained through the smoking-frequency inputting module 123 and the smoking-mode inputting module 124. Specifically, parameters of the atomizer 112, such as the superficial area, heat, temperature, power of the surface and power, may be calculated according to the heating wire parameters, and further the working power of the heating wire in the atomizer 112 may be calculated according to the above parameters of the atomizer 112 and the smoking frequency, such that the electronic cigarette 11 works in the working mode selected by users, after the heating wire parameters have been obtained by the processing module 125.

S205, the electronic cigarette 11 obtains the working power through the wireless communication connection from the mobile terminal 12, and controls the heating wire thereof to work at the working power.

In step S205, the electric power supply 111 of the electronic cigarette 11 further comprises a control module 114 formed therein. The control module 114 obtains the working power through the wireless communication connection between the first communication module 113 and the second communication module 121, and then controls the heating wire of the atomizer 112 to work at the working power.

The beneficial effects of the disclosure are as follow. The mobile terminal 12 builds a communication with the electronic cigarette 11, obtains the identification number of the electronic cigarette 11, corresponding heating wire parameter, and the heating wire parameters according to the identification number of the electronic cigarette 11 from the cloud server 13, and acquires the working power of the electronic cigarette 11 according to heating wire parameters and smoking parameters inputted from the mobile terminal 12. The electronic cigarette 11 obtains the working power through the communication connection from the mobile terminal 12 and controls the heating wire thereof to work at the working power. In the above manner, outputting power may be controlled smartly in the disclosure, thus giving users different smoking feeling to the electronic cigarette.

## Claims

1. A smart control method for an electronic cigarette (11), comprising:
building (S101) a communication between a mobile terminal (12) and the electronic cigarette (11);
**characterized in that**, the method further comprises:
obtaining (S102) an identification number of the electronic cigarette (11) by the mobile terminal (12), wherein the identification number of the electronic cigarette (11) and heating wire parameters are stored in a cloud server (13), and the heating wire parameters correspond to the identification number;
obtaining (S104) the heating wire parameters by the mobile terminal (12) from the cloud server (13) according to the identification number of the electronic cigarette (11);
acquiring (S105) a working power of the electronic cigarette (11) by the mobile terminal (12) according to the heating wire parameters and smoking parameters inputted from the mobile terminal (12); and
obtaining (S106) the working power by the electronic cigarette (11) via the communication from the mobile terminal (12), and controlling a heating wire of the electronic cigarette (11) to work at the working power.

2. The method according to claim 1, wherein the step of obtaining the identification number of the electronic cigarette (11) by the mobile terminal (12), comprises:
scanning (S202) a two-dimensional bar code of the electronic cigarette (11) by the mobile terminal (12) to obtain the identification number of the electronic cigarette (11), wherein the identification number of the electronic cigarette (11) is the two-dimensional bar code uniquely.

3. The method according to claim 1, wherein:
the step of building a communication between a mobile terminal (12) and the electronic cigarette (11), is building a wireless communication by the mobile terminal (12) with the electronic cigarette (11); and
the step of obtaining the working power by the electronic cigarette (11) via the communication from the mobile terminal (12) and controlling a heating wire of the electronic cigarette (11) to work at the working power, is obtaining the working power by the electronic cigarette (11) via the wireless communication from the mobile terminal (12), and controlling the heating wire thereof to work at the working power.

4. The method according to claim 1, wherein the smoking parameters comprise a smoking frequency and smoking modes at least including a max smoke outputting mode, a best taste outputting mode, a mini power outputting mode and a healthy smoking mode.

5. The method according to claim 4, wherein the step of acquiring a working power of the electronic cigarette (11) by the mobile terminal (12) according to the heating wire parameters and the smoking parameters inputted from the mobile terminal (12), comprises:
calculating parameters of an atomizer (112) in the electronic cigarette (11) according to the heating wire parameters; and
calculating the working power of the heating wire according to the parameters of the atomizer (112) and the smoking frequency.

6. The method according to claim 1, wherein the heating wire parameters at least comprise a wire-diameter parameter and series-parallel connection parameters of the heating wire.

7. A smart control system for an electronic cigarette (11), comprising:
the electronic cigarette (11), having an electric power supply (111) formed therein;
**characterized in that**, the system further comprises:
a cloud server (13); configured to store an identification number of the electronic cigarette (11) and heating wire parameters corresponding to the identification number of the electronic cigarette (11); and
a mobile terminal (12), configured to build a communication with the electronic cigarette (11), obtain the identification number of the electronic cigarette (11) and the heating wire parameters corresponding to the identification number of the electronic cigarette (11) from the cloud server (13), and acquire a working power of the electronic cigarette (11) according to the heating wire parameters and smoking parameters inputted from the mobile terminal (12);
wherein the electronic cigarette (11) is configured to obtain the working power via the communication from the mobile terminal (12), and control the heating wire thereof to work at the working power.

8. The system according to claim 7, wherein the identification number of the electronic cigarette (11) is a unique two-dimensional bar code, and the mobile terminal (12) further comprises a scanning module (122) configured to scan the two-dimensional bar code of the electronic cigarette (11) to obtain the identification number of the electronic cigarette (11).

9. The system according to claim 7, wherein the electric power supply (111) comprises a first communication module (113) formed therein, the mobile terminal (12) further comprises a second communication module (121) formed therein, and the first communication module (113) and the second communication module (121) are configured to build a wireless communication between the electronic cigarette (11) and the mobile terminal (12).

10. The system according to claim 9, wherein the electric power supply (111) further comprises a control module (114) configured to obtain the working power from the mobile terminal (12) via a wireless communication and control the heat wire of the electronic cigarette (11) to work at the working power.

11. The system according to claim 7, wherein the mobile terminal (12) further comprises a smoking-frequency inputting module (123) and a smoking-mode inputting module (124) formed therein, the smoking-frequency inputting module (123) is configured to input a user's smoking frequency to gather the smoking parameters, and the smoking-mode inputting module (124) is configured to input a user's smoking mode to gather the smoking parameters, and the smoking-mode inputting module (124) comprises a group of smoking modes consisted of a max smoke outputting mode, a best taste outputting mode, a mini power outputting mode and a healthy smoking mode.

12. The system according to claim 11, wherein the mobile terminal (12) further comprises a processing module (125), configured to calculate the working power of the electronic cigarette (11) according to the heating wire parameters and the smoking parameters after obtaining the heating wire parameters corresponding to the identification number of the electronic cigarette (11) from the cloud server (13), and the smoking parameters from the smoking-frequency inputting module (123) and the smoking-mode inputting module (124).

13. The system according to claim 7, wherein the heating wire parameters at least comprise a wire-diameter parameter and series-parallel connection parameters of the heating wire.

14. An electronic cigarette (11), comprising:
an electric power supply (111), having a communication module and a control module (114) formed therein; and
an electronic tag, configured to identify an identification number thereof;
**characterized in that**, the communication module is configured to build a communication with a mobile terminal (12) configured to obtain the identification number of the electronic cigarette (11) and heating wire parameters corresponding to the identification number of the electronic cigarette (11) from a cloud server (13) in which the identification number of the electronic cigarette (11) and the heating wire parameters corresponding to the identification number of the electronic cigarette (11) are stored, and the control module (114) is configured to obtain a working power corresponding to the identification number from the mobile terminal (12) via the communication connection and control the heat wire therein to work at the working power.

15. The electronic cigarette according to claim 14, wherein the electronic tag is a two-dimensional bar code uniquely.

## Patentansprüche

1. Verfahren zur intelligenten Steuerung für eine elektronische Zigarette (11), umfassend:
Aufbauen (S101) einer Kommunikation zwischen einem mobilen Endgerät (12) und der elektronischen Zigarette (11);
**dadurch gekennzeichnet, dass** das Verfahren weiter umfasst:
Erhalten (S102) einer Kennnummer der elektronischen Zigarette (11) mittels des Endgeräts (12), wobei die Kennnummer der elektronischen Zigarette (11) und die Heizdrahtparameter in einem Cloud-Server (13) gespeichert sind, und die Heizdrahtparameter der Kennnummer entsprechen;
Erhalten (S104) der Heizdrahtparameter aus dem Cloud-Server (13) mittels des Endgeräts (12) gemäß der Kennnummer der elektronischen Zigarette (11);
Erfassen (S105) einer Arbeitsleistung der elektronischen Zigarette (11) mittels des Endgeräts (12) gemäß den Heizdrahtparametern und Rauchparametern, die aus dem Endgerät (12) eingegeben wurden; und
Erhalten (S106) der Arbeitsleistung von der elektronischen Zigarette (11) über die Kommunikation aus dem mobilen Endgerät (12), und Steuern eines Heizdrahtes der elektronischen Zigarette (11) damit er an der Arbeitsleistung arbeitet.

2. Verfahren nach Anspruch 1, wobei der Schritt des Erhaltens der Kennnummer der elektronischen Zigarette (11) mittels des Endgeräts (12) umfasst:
Scannen (S202) eines zweidimensionalen Barcodes der elektronischen Zigarette (11) mittels des Endgeräts (12) zum Erhalten der Kennnummer der elektronischen Zigarette (11), wobei die Kennnummer der elektronischen Zigarette (11) eindeutig ein zweidimensionaler Barcode ist.

3. Verfahren nach Anspruch 1, wobei:
der Schritt des Aufbaus (S101) einer Kommunikation zwischen einem mobilen Endgerät (12) und der elektronischen Zigarette (11), der Aufbau einer drahtlosen Kommunikation vom mobilen Endegerät (12) mit der elektronischen Zigarette (11) ist; und
der Schritt des Erhaltens der Arbeitsleistung von der elektronischen Zigarette (11) über die Kommunikation aus dem mobilen Endgerät (12), und des Steuerns eines Heizdrahtes der elektronischen Zigarette (11), damit er an der Arbeitsleistung arbeitet, die Arbeitsleistung von der elektronischen Zigarette (11) über die Kommunikation aus dem mobilen Endgerät (12) erhält, und den Heizdraht der elektronischen Zigarette (11) steuert, damit er an der Arbeitsleistung arbeitet.

4. Verfahren nach Anspruch 1, wobei die Rauchparameter eine Rauchfrequenz und Rauchweisen umfassen, die zu mindestens einen maximalen Rauchausgabemodus, einen besten Geschmackproduktionsmodus, einen minimalen Leistungsausgabemodus und einen gesunden Rauchmodus enthalten.

5. Verfahren nach Anspruch 4, wobei der Schritt des Erfassens einer Arbeitsleistung der elektronischen Zigarette (11) mittels des Endgeräts (12) gemäß den Heizdrahtparametern und Rauchparametern, die aus dem Endgerät (12) eingegeben wurden, umfassen:
Berechnen von Parametern eines Zerstäubers (112) in der elektronischen Zigarette (11) gemäß den Heizdrahtparametern; und
Berechnen der Arbeitsleistung des Heizdrahtes gemäß den Parametern des Zerstäubers (112) und der Rauchfrequenz.

6. Verfahren nach Anspruch 1, wobei die Heizdrahtparameter zu mindestens einen Drahtdurchmesserparameter und einen Reihen-Parallelschaltungsparameter des Heizdrahtes umfassen.

7. Intelligente Steuersystem für eine elektronische Zigarette (11), umfassend:
die elektronische Zigarette (11), die eine darin gebildete elektrische Energieversorgung (111) aufweist;
**dadurch gekennzeichnet, dass** das System weiter umfasst:
einen Cloud-Server (13), der zur Speicherung einer Kennnummer der elektronischen Zigarette (11) und von Heizdrahtparametern, die der Kennnummer der elektronischen Zigarette (11) entsprechen, konfiguriert ist; und
ein mobiles Endgerät (12), das zum Aufbau einer Kommunikation mit der elektronischen Zigarette (11), zum Erhalt der Kennnummer der elektronischen Zigarette (11) und der der Kennnummer der elektronischen Zigarette (11) entsprechenden Heizdrahtparameter aus dem Cloud-Server (13), und zur Erfassung einer Arbeitsleistung der elektronischen Zigarette (11) gemäß den Heizdrahtparametern und Rauchparametern, die aus dem Endgerät (12) eingegeben wurden, konfiguriert ist;
wobei die elektronische Zigarette (11) zum Erhalt der Arbeitsleistung über die Kommunikation aus dem mobilen Endgerät (12), und zur Steuerung des Heizdrahtes der elektronischen Zigarette (11), damit er an der Arbeitsleistung arbeitet, konfiguriert ist.

8. System nach Anspruch 7, wobei die Kennnummer der elektronischen Zigarette (11) ein eindeutiger zweidimensionaler Barcode ist, und das mobile Endgerät (12) weiter ein Scan-Modul (122) umfasst, das zum Scannen des zweidimensionalen Barcodes der elektronischen Zigarette (11) konfiguriert ist, damit die Kennnummer der elektronischen Zigarette (11) erhalten wird.

9. System nach Anspruch 7, wobei die elektrische Energieversorgung (111) ein erstes darin gebildetes Kommunikationsmodul (113) umfasst, das mobile Endgerät (12) weiter ein zweites darin gebildetes Kommunikationsmodul (121) umfasst, und das erste Kommunikationsmodul (113) und das zweite Kommunikationsmodul (121) zum Aufbau einer drahtlosen Kommunikation zwischen der elektronischen Zigarette (11) und dem mobilen Endgerät (12) konfiguriert sind.

10. System nach Anspruch 9, wobei die elektrische Energieversorgung (111) weiter ein Steuermodul (114) umfasst, das zum Erhalt der Arbeitsleistung aus dem mobilen Endgerät (12) über eine drahtlose Kommunikation und zur Steuerung des Heizdrahtes der elektronischen Zigarette (11) konfiguriert ist, damit er an der Arbeitsleistung arbeitet.

11. System nach Anspruch 7, wobei das mobile Endgerät (12) weiter ein Rauchfrequenzeingabemodul (123) und ein Rauchmoduseingabemodul (124) umfasst, die darin gebildet sind, das Rauchfrequenzeingabemodul (123) zur Eingabe einer Benutzerrauchfrequenz zur Sammlung der Rauchparameter, und das Rauchmoduseingabemodul (124) zur Eingabe eines Benutzermodus zur Sammlung der Rauchparameter, und das Rauchmoduseingabemodul (124) eine Gruppe von Rauchmodi umfasst, die einen maximalen Rauchausgabemodus, einen besten Geschmackproduktionsmodus, einen minimalen Leistungsausgabemodus und einen gesunden Rauchmodus enthalten.

12. System nach Anspruch 11, wobei das mobile Endgerät (12) weiter ein Verarbeitungsmodul (125) umfasst, das zur Berechnung der Arbeitsleistung der elektronischen Zigarette (11) gemäß den Heizdrahtparametern und Rauchparametern nach Erhalt der der Kennnummer der elektronischen Zigarette (11) entsprechenden Heizdrahtparameter aus dem Cloud-Server (13), und der Rauchparameter aus dem Rauchfrequenzeingabemodul (123) und dem Rauchmoduseingabemodul (124).

13. System nach Anspruch 7, wobei die Heizdrahtparameter zu mindestens einen Drahtdurchmesserparameter und Reihen-Parallelschaltungsparameter des Heizdrahtes umfassen.

14. Elektronische Zigarette (11), umfassend:
eine elektrische Energieversorgung (111), die, darin gebildet, ein Kommunikationsmodul und ein Steuermodul (114) aufweisen; und
eine elektronische Kennzeichnung, die zur Identifikation einer Kennnummer davon konfiguriert ist;
**dadurch gekennzeichnet, dass** das Kommunikationsmodul zum Aufbau einer Kommunikation mit einem mobilen Endgerät (12), das zum Erhalt der Kennnummer der elektronischen Zigarette (11) und von der Kennnummer der elektronischen Zigarette entsprechenden Heizdrahtparametern aus einem Cloud-Server, in dem die Kennnummer der elektronischen Zigarette (11) und die der Kennnummer der elektronischen Zigarette entsprechenden Heizdrahtparameter gespeichert sind, und das Steuermodul (114) zum Erhalt einer der Identifikationsnummer entsprechenden Arbeitsleistung aus dem mobilen Endgerät (12) über die Kommunikationsverbindung und zur Steuerung des Heizdrahtes darin , damit er an dem Arbeitsleistung arbeitet, konfiguriert ist.

15. Elektronische Zigarette nach Anspruch 14, wobei die elektronische Kennzeichnung eindeutig ein zweidimensionaler Barcode ist.

## Revendications

1. Procédé de commande intelligent pour une cigarette électronique (11), comprenant:
l'établissement (S101) d'une communication entre un terminal mobile (12) et la cigarette électronique (11):
**caractérisé en ce que**, le procédé comprend en outre:
l'obtention (S102) d'un numéro d'identification de la cigarette électronique (11) au moyen du terminal mobile (12), le numéro d'identification de la cigarette électronique de la cigarette électronique et les paramètres de fil électrique de chauffage étant stockés dans un serveur cloud (13), et les paramètres de fil électrique de chauffage correspondant au numéro d'identification;
l'obtention (S104) des paramètres de fil électrique de chauffage au moyen du terminal mobile (12) à partir du serveur cloud (13) selon le numéro d'indentification de la cigarette électronique (11);
l'acquisition (S105) d'une puissance électrique de fonctionnement de la cigarette électronique (11) au moyen du terminal mobile (12) selon les paramètres de fil électrique de chauffage et des paramètres de fumage entrés à partir du terminal mobile (12); et
l'obtention (S106) de la puissance électrique de fonctionnement au moyen de la cigarette électronique (11) par l'intermédiaire de la communication à partir du terminal mobile (12), et commande du fil électrique de chauffage de la cigarette mobile (11) de sorte qu'il fonctionne à la puissance de fonctionnement.

2. Procédé selon la revendication 1, dans lequel l'étape d'obtention du numéro d'identification de la cigarette électronique (11) au moyen du terminal mobile (12) comprend:
le scannage (S202) d'un code-barre bidimensionnel de la cigarette électronique (11) au moyen du terminal mobile (12) afin d'obtenir le numéro d'indentification de la cigarette électronique (11), le numéro d'indentification de la cigarette électronique (11) étant uniquement le code-barre bidimensionnel.

3. Procédé selon la revendication 1, dans lequel:
l'étape d'établissement d'une communication entre un terminal mobile (12) et la cigarette électronique (11) est d'établir une communication sans fil au moyen du terminal mobile (12) avec la cigarette électronique (11); et
l'étape d'obtention de la puissance électrique de fonctionnement au moyen de la cigarette électronique (11) par l'intermédiaire de la communication à partir du terminal mobile (12) et de commande d'un fil électrique de chauffage de la cigarette mobile (11) de sorte qu'il fonctionne à la puissance de fonctionnement, obtient la puissance de fonctionnement au moyen de la cigarette électronique (11) par l'intermédiaire de la communication sans fil à partir du terminal mobile (12), et commande son fil électrique de chauffage de sorte qu'il fonctionne à la puissance de fonctionnement.

4. Procédé selon la revendication 1, dans lequel les paramètres de fumage comprennent une fréquence de fumage et des modes de fumage comportant au moins un mode de production maximale de fumée, un mode de production d'un goût optimal, un mode de production d'une puissance électrique minimale et un mode de fumage sain.

5. Procédé selon la revendication 4, dans lequel l'étape d'acquisition d'une puissance électrique de fonctionnement de la cigarette électronique (11) au moyen du terminal mobile (12) selon les paramètres de fil électrique de chauffage et des paramètres de fumage entrés à partir du terminal mobile (12) comprend:
le calcul des paramètres d'un atomiseur (112)) dans la cigarette électronique (11) selon les paramètres de fil électrique de chauffage; et
le calcul de la puissance électrique de chauffage du fil électrique de chauffage selon les paramètres de l'atomiseur (112) et la fréquence de fumage.

6. Procédé selon la revendication 1, dans lequel les paramètres de fil électrique de chauffage comprennent au moins un paramètre de diamètre de fil électrique et des paramètres de connexion en série/en parallèle du fil électrique de chauffage.

7. Système de commande intelligent pour une cigarette électronique (11) comprenant:
la cigarette électronique (11), présentant une alimentation en énergie électrique (111) formée en son sein;
**caractérisé en ce que** le système comprend en outre:
un serveur cloud (13) configuré pour stocker un numéro d'identification de la cigarette électronique (11) et des paramètres de fil électrique de chauffage correspondant un numéro d'identification de la cigarette électronique (11); et
un terminal mobile (12) configuré pour établir une communication avec la cigarette électronique, pour obtenir le numéro d'identification de la cigarette électronique (11) et les paramètres de fil électrique de chauffage correspondant un numéro d'identification de la cigarette électronique (11) à partir du serveur cloud (13), et pour acquérir une puissance électrique de fonctionnement de la cigarette électronique (11) selon les paramètres de fil électrique de chauffage et les paramètres de fumage entrés à partir du terminal mobile (12);
système dans lequel la cigarette électronique (11) est configurée pour obtenir la puissance électrique de fonctionnement par l'intermédiaire de la communication à partir du terminal mobile (12), et pour commander le fil électrique de chauffage de celle-ci, de sorte qu'il fonctionne à la puissance de fonctionnement.

8. Système selon la revendication 7, dans lequel le numéro d'identification de la cigarette électronique (11) est un code-barre bidimensionnel unique, et le terminal mobile comprend en outre un module de scannage (122) configuré pour scanner le code-barre bidimensionnel de la cigarette électronique (11) afin d'obtenir le numéro d'identification de la cigarette électronique (11).

9. Système selon la revendication 7, dans lequel l'alimentation en puissance électrique (111) comprend un premier module de communication (113) formé au sein de celle-ci, le terminal mobile (12) comprend en outre un deuxième module de commande (121) formé au sein de celui-ci, et le premier module de communication (113) et le deuxième module de commande (121) sont configurés pour établir une communication sans fil entre la cigarette électronique (11) et le terminal mobile (12).

10. Système selon la revendication 9, dans lequel l'alimentation en puissance électrique (111) comprend en outre un module de commande (114) configuré pour obtenir la puissance de fonctionnement à partir du terminal mobile (12) par l'intermédiaire d'une communication sans fil et pour commander le fil électrique de chauffage de la cigarette électronique (11), de sorte qu'il fonctionne à la puissance de fonctionnement.

11. Système selon la revendication 7, dans lequel le terminal mobile (12) comprend en outre un module d'entrée de fréquence de fumage (123) et un module d'entrée de modes de fumage (124) formées au sein de celui-ci, le module d'entrée de fréquence de fumage est configuré pour entrer une fréquence de fumage d'utilisateur afin de recueillir les paramètres de fumage, et le module d'entrée de modes de fumage (124) est configuré pour entrer un mode de fumage d'utilisateur afin de recueillir les paramètres de fumage, et le module d'entrée de modes de fumage (124) comprend un groupe de modes de fumage comportant un mode de production maximale de fumée, un mode de production d'un goût optimal, un mode de production d'une puissance électrique minimale et un mode de fumage sain.

12. Système selon la revendication 11, dans lequel le terminal mobile (12) comprend en outre un module de traitement (125), configuré pour calculer la puissance de fonctionnement de la cigarette électronique (11) selon les paramètres de fil électrique de chauffage et les paramètres de fumage après obtention des paramètres de fil électrique de chauffage correspondant au numéro d'identification de la cigarette électronique (11) à partir du serveur cloud (13), et des paramètres de fumage à partir du module d'entrée de fréquence de fumage (123) et du module d'entrée de modes de fumage (124).

13. Système selon la revendication 7, dans lequel les paramètres de fil de chauffage comprennent au moins un paramètre de diamètre de fil électrique et des paramètres de connexion en série/en parallèle du fil électrique de chauffage.

14. Cigarette électronique (11), comprenant:
une alimentation en énergie électrique (111), présentant un module de communication et un module de commande (114) formés en son sein; et
une étiquette électronique configurée pour identifier un numéro d'identification de la cigarette électronique;
**caractérisée en ce que** le module de communication est configuré pour établir une communication avec un terminal mobile (12) configuré pour obtenir le numéro d'identification de la cigarette électronique (11) et des paramètres de fil électrique de chauffage correspondant au numéro d'identification de la cigarette électronique (11) à partir du serveur cloud (13), dans lequel sont stockés le numéro d'identification de la cigarette électronique (11) et les paramètres de fil électrique de chauffage correspondant au numéro d'identification de la cigarette électronique (11), et le module de commande (114) est configuré pour obtenir une puissance électrique de fonctionnement correspondant au numéro d'identification à partir du terminal mobile (12) par l'intermédiaire de la connexion de communication et pour commander le fil électrique de chauffage en son sein de sorte qu'il fonctionne à la puissance de fonctionnement.

15. Cigarette électronique (11) selon la revendication 14, dans laquelle l'étiquette électronique est uniquement un code-barre bidimensionnel.
